(19) Europäisches Patentamt
European Patent Office
Office européen des brevets

(11) **EP 4 441 734 B1**

(12) **EUROPEAN PATENT SPECIFICATION**

(45) Date of publication and mention
of the grant of the patent:
**14.01.2026 Bulletin 2026/03**

(21) Application number: **22822136.2**

(22) Date of filing: **25.11.2022**

(51) International Patent Classification (IPC):
*G10L 21/02* (2013.01)    *G10L 21/0272* (2013.01)
*G10L 25/51* (2013.01)    *G10L 15/18* (2013.01)

(52) Cooperative Patent Classification (CPC):
**G10L 21/02; G10L 21/0272; G10L 25/51;**
G10L 15/1822

(86) International application number:
**PCT/EP2022/083362**

(87) International publication number:
**WO 2023/099359 (08.06.2023 Gazette 2023/23)**

(54) **AN AUDIO APPARATUS AND METHOD OF OPERATING THEREFOR**

AUDIOVORRICHTUNG UND VERFAHREN ZUM BETRIEB DAVON

APPAREIL AUDIO ET SON PROCÉDÉ DE FONCTIONNEMENT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **02.12.2021 EP 21211964**

(43) Date of publication of application:
**09.10.2024 Bulletin 2024/41**

(73) Proprietor: **Koninklijke Philips N.V.**
**5656 AG Eindhoven (NL)**

(72) Inventors:
• **JOHNSON, Mark Thomas**
**5656 AG Eindhoven (NL)**

• **JANSSEN, Rik Jozef Martinus**
**5656 AG Eindhoven (NL)**
• **BEREZHNOY, Igor**
**5656 AG Eindhoven (NL)**
• **PAUL, Soubhik**
**5656 AG Eindhoven (NL)**

(74) Representative: **Philips Intellectual Property &
Standards**
**High Tech Campus 52**
**5656 AG Eindhoven (NL)**

(56) References cited:
**US-A1- 2005 088 981     US-A1- 2020 327 877
US-B1- 7 006 616     US-B2- 8 676 572**

**Description**

FIELD OF THE INVENTION

The invention relates to an apparatus and method for generating one or more audio output signals, and in particular, but not exclusively, to generation of audio signals for distribution to remote devices.

BACKGROUND OF THE INVENTION

There is currently a strong trend towards more distributed ways of performing many operations and interactions where traditionally a group of people would be colocated and interact directly. Many such new distributed approaches are fundamentally based on distribution of audio signals between different locations allowing the different participants in different locations to interact and communicate. US 7 006 616B1 and US2005/088981A1 disclose examples of approaches for remote teleconferencing.

US 2020/327877 A1 discloses another example of an approach for a wearable device.

As an example, in medical environments, such as in an ambulance, hospital ward, or operating theatre, a plurality of health professionals may seek to interact with each other to provide an improved service. Traditionally medical environments required all participants to be present in the same location to interwork efficiently. However, increasingly, such scenarios are enabled or facilitated using audio distribution, such that a number of people may be located remotely from the patient. For example, a number of people, including the main surgeon, nurses, patient etc., may be present in the actual operating theatre but in addition, a number of specialists may be located remotely and possibly far away. For example, a technical expert for the equipment may be remotely located, a consultant with very specific expertise and remotely located may be involved etc.

Another example is in the field of fault rectification or service/maintenance of various equipment including computer equipment. In such cases, daily users and potentially a field service engineer may be located on site with a range of engineers specializing in different aspects of the equipment being remotely located.

Thus, many practical service sessions may include a multiplicity of actors present locally or remotely. These actors may include:

- The field service engineer
- Technical staff from the location
- Clinical staff from the location
- Non-technical or non-clinical staff and experts, administrative and/or support staff.
- Sometimes patients (or even family members)
- Etc.

As another example, many meetings, or even court-cases, are increasingly performed using video conferencing that includes audio conferencing. In such cases, the main meeting or court room may often be the location of many of the participants (e.g. judge, attorneys, court staff) whereas other participants (e.g. the defendant or witnesses) may participate via suitable audiovisual conferencing links.

However, whereas such approaches tend to be highly advantageous in many situations, they do rely heavily on efficient audio distribution. It further introduces a number of new problems and challenges, such as how to support maintenance of privacy, efficient and targeted communication, practical and preferably low complexity implementations etc. The preferences for, and requirements of, any audio signal being provided to external sources may vary substantially between different embodiments, and there is a substantial desire to be able to provide audio services and signals that may provide an improved overall experience and which may support the distributed locations.

Typically, such scenarios are currently supported by simple audio conference solutions where the audio in the environment/ room is captured by one or more microphones and transmitted to the remote sources. However, such a basic approach tends to not be optimal, and it would be desirable for a more efficient and/or capable audio distribution to be used including one that may provide additional services and/or functionality that could further enhance or support the distributed user experience.

An improved approach would be advantageous in many scenarios. In particular, an approach that allows improved operation, increased flexibility, reduced complexity, facilitated implementation, an improved user experience, a more reliable operation or robust operation, reduced computational burden, wider applicability, facilitated operation, increased support for flexible scenarios, improved adaptation and/or improved performance and/or operation would be advantageous.

SUMMARY OF THE INVENTION

Accordingly, the Invention seeks to preferably mitigate, alleviate or eliminate one or more of the above mentioned disadvantages singly or in any combination.

According to an aspect of the invention there is provided an audio apparatus comprising: an audio capturer arranged to capture audio in an environment, the audio capturer being arranged to form a plurality of audio beams and to generate an audio capture signal for each audio beam of the plurality of audio beams; a beam stearer arranged to steer each audio beam of the plurality of audio beams towards a different audio source; an analyzer arranged to analyze at least a first audio capture signal to determine speech properties for audio of the first audio capture signal; a categorizer arranged to determine a first speaker category out of a plurality of speaker categories representing a role of a speaker for a first audio source of the first audio capture signal in response to the speech properties; an audio generator arranged to generate a first audio output signal for a first user by combining audio capture signals including the first audio capture signal; and an adapter arranged to adapt the first audio output signal in response to the first speaker category and an access authorization property indicative of an allowable degree of access to at least one category of information for the first user.

The invention may provide an improved audio distribution system, and may allow improved support, or even enablement, of a large number of audio based applications and services. The approach may allow an improved support for e.g. including remote participants that are engaging with people locally present in the environment, such as specifically in a room. The approach may allow improved support and/or facilitate many practical applications and services where people in different locations can effectively participate in the same activity and with possibly all participants being able to efficiently interact and communicate with each other. The approach may often provide a user experience which more closely resembles that which can be experienced in situations where all participants are in the same place. The approach may in many cases provide an improved and differentiated experience for e.g. remote participants.

The approach may in many scenarios provide an adaptation and improved control over the audio that is provided via the output audio signals. For example, the generated audio may be adapted to exclude some speakers or parts of spoken audio that are not appropriate for the remote participants.

The apparatus may be arranged to transmit the audio output signal to remote devices, e.g. over a network. At least some of the speech properties may be indicative of a cognitive content of speech of the first audio capture signal.

In some embodiments, the apparatus may comprise an output processor for outputting the first audio output signal. The output processor may be arranged to provide the first audio signal to a remote device. The output processor may comprise an audio encoder for encoding the first audio signal and a communicator for communicating the encoded first audio signal to a remote device. The communicator may be arranged to transmit the encoded first audio signal over a communication channel, such as a communication channel provided by a network.

In accordance with an optional feature of the invention, the audio generator is further arranged to generate a different second audio output signal for a second user by combining audio capture signals including the first audio capture signal; and the adapter is arranged to individually adapt the second audio output signal in response to the first speaker category and a property of the second user.

This may in many embodiments and scenarios provide improved performance, operation, and/or an improved user experience.

In some embodiments, the apparatus may comprise an output processor for outputting the second audio output signal. The output processor may be arranged to provide the second signal to a remote device. The output processor may comprise an audio encoder for encoding the second audio signal and a communicator for communicating the encoded second audio signal to a remote device. The communicator may be arranged to transmit the encoded first audio signal over a communication channel, such as a communication channel provided by a network.

In accordance with an optional feature of the invention, the analyzer is arranged to detect words in the first audio capture signal, and to determine at least a first speech property of the speech properties in response to the detected words.

This may in many embodiments and scenarios provide improved performance, operation, and/or an improved user experience. It may provide a practical and/or often typically a more accurate determination of a suitable speaker category.

In accordance with an optional feature of the invention, the analyzer is arranged to determine the first of the speech properties in response to a Natural Language Processing, NLP, of the detected words.

This may provide improved operation and/or performance in many embodiments and scenarios.

The property of the first and/or second user may be an access authorization property indicative of an allowable degree of access to at least one category of information for the user.

In accordance with an optional feature of the invention, the adapter is arranged to select which audio capture signals of the plurality of audio capture signals are included in the combination to generate the first audio output signal in response to the first speaker category.

This may provide an improved application and/or service in many embodiments and scenarios. The approach may automatically adapt and customize the audio output signal to exclude some categories of speakers.

In accordance with an optional feature of the invention, the audio apparatus further comprises a content analyzer which is arranged to analyze segments of the first audio capture signal to determine a content category for the segments out of a plurality of content categories; and wherein the adapter is arranged to adapt the first audio output signal in response to the content categories.

This may provide an improved application and/or service in many embodiments and scenarios. The approach may automatically adapt and customize the audio output signal to exclude some content from the audio in the environment, such as specific sentences/ utterances for some speakers. For example, personal information may be excluded unless from speakers authorized to disclose such personal information.

In accordance with an optional feature of the invention, the adapter is arranged to attenuate segments of the first audio capture signal for at least one content category and first speaker category combination, and to not attenuate segments of the first audio capture signal for at least one other content category and first speaker category combination.

This may provide an improved application and/or service in many embodiments and scenarios. The approach may for example allow the system to attenuate or mute audio content that is desired not to be communicated to remote participants.

The adapter may specifically be arranged to mute segments of the first audio capture signal for at least one content category and first speaker category combination, and to not mute segments of the first audio capture signal for at least one other content category and first speaker category combination.

In accordance with an optional feature of the invention, a user interface for presenting an indication of the segments being attenuated.

This may provide an improved operation and user experience in many embodiments.

In accordance with an optional feature of the invention, the categorizer comprises: a signature generator for generating signatures for audio sources in response to frequency distributions of the audio capture signals for the audio sources; a store for storing signatures for audio sources linked to speaker categories determined for the audio sources; and wherein the signature generator is arranged to generate a first signature for the first audio source in response to the first audio source being detected; and the categorizer is arranged to determine a match between the first signature and a stored signature stored in the store, and to determine the first speaker category for the first audio source in response to a speaker category linked to the stored signature.

This may provide improved performance and operation in many embodiments and may in particular provide faster and/or more accurate speaker categorization.

In accordance with an optional feature of the invention, the audio capturer is arranged to detect a new audio source, and the beam stearer is arranged to switch an audio beam from being steered towards a previous audio source to be steered towards the new audio source in response to the detection of the new audio source, and to select the previous audio source from a plurality of audio sources to which beams are steered in response to a speaker category of the previous audio source.

This may provide improved performance and/or operation in many embodiments, and may in particular provide improved and/or faster adaptation to changes in active speakers.

In accordance with an optional feature of the invention, the audio apparatus further comprises: a detector for detecting an active audio capture signal comprising a currently active speech signal; and a user interface for presenting an indication of a speaker category assigned to an audio source of the active audio capture signal.

This may provide improved operation and/or an improved user experience in many scenarios.

In accordance with an optional feature of the invention, the audio generator is arranged to adapt at least one combination weight of the audio capture signals in response to the first speaker category.

This may provide improved operation and/or an improved user experience in many scenarios.

In accordance with an optional feature of the invention, the audio capturer is arranged to generate a variable audio beam and the beam stearer is arranged to:
vary the variable audio beam to detect a potential new audio source; determine if there is a match between the potential new audio source and any audio source towards which any beam of the plurality of beams is steered, the determination of whether there is a match being in response to a comparison of at least one of a property of the variable audio beam and a property of audio beams of the plurality of audio beams, and a property of an audio capture signal for the variable audio beam and a property of audio capture signals for the plurality of audio beams; and switch an audio beam from being directed to a previous audio source to be directed to the potential new audio source if no match is detected.

This may provide improved operation and/or an improved user experience in many scenarios.

According to an aspect of the invention there is provided a method of operation for an audio apparatus, the method comprising: capturing audio in an environment by forming a plurality of audio beams and generating an audio capture signal for each audio beam of the plurality of audio beams; steering each audio beam of the plurality of audio beams towards a different audio source; analyzing at least a first audio capture signal to determine speech properties for audio of the first audio capture signal; determining a first speaker category out of a plurality of speaker categories representing a role of a speaker for a first audio source of the first audio capture signal in response to the speech properties;

generating a first audio output signal for a first user by combining audio capture signals including the first audio capture signal; and adapting the first audio output signal in response to the first speaker category and an access authorization property indicative of an allowable degree of access to at least one category of information for the first user.

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which

FIG. 1 illustrates an example of a use scenario using audio distribution;
FIG. 2 illustrates an example of elements of an apparatus in accordance with some embodiments of the invention;
FIG. 3 illustrates an example of a knowledge graph that may be used in an apparatus in accordance with some embodiments of the invention;
FIG. 4 illustrates an example of elements of a categorizer for an apparatus in accordance with some embodiments of the invention;
FIG. 5 illustrates an example of elements of a beamformer for an apparatus in accordance with some embodiments of the invention;
FIG. 6 illustrates an example of a context development of a conversation; and
FIG. 7 illustrates an example of an approach for detecting a context change for a conversation.

DETAILED DESCRIPTION OF SOME EMBODIMENTS OF THE INVENTION

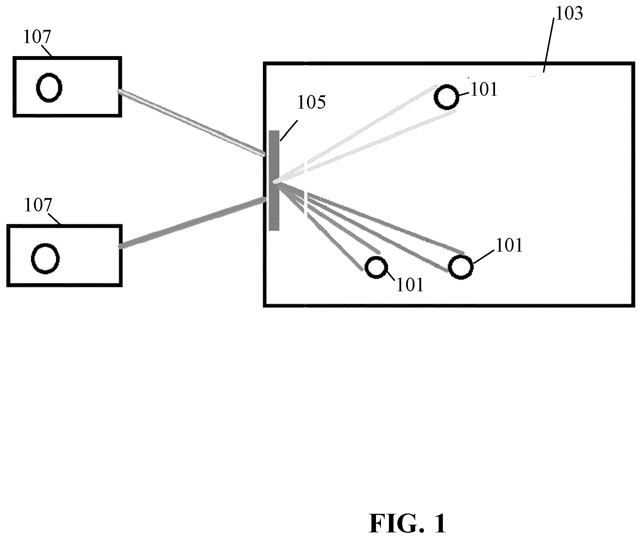

FIG. 1 illustrates an example of an arrangement and application in which distributed interaction between people is supported by an audio distribution/ communication system. In the example, a group of different people 101 are located in a room 103 and an audio distribution/ communication apparatus 105 support communication with one or more remote devices/ participants 107. In the example, the audio communication apparatus 105 is arranged to communicate with remote audio devices 107 each supporting one or more remote participants. In some cases, the remote audio devices 107 may simply comprise functionality for rendering and reproducing received audio data and for capturing audio and encoding it as suitable audio data for transmission to the audio communication apparatus 105. For example, the remote audio devices 107 may be relatively low complexity conference devices. In other embodiments, more complex devices may be used including devices comprising functionality for supporting video communication, for presenting data to users etc.

As an exemplary scenario, the room 103 may be an operating theatre or medical examination room in which a number of different people may be present. These may have different roles and functions and include e.g. a patient, a surgeon, one or more nurses, relatives of the patient, technical support staff etc. The current activity may further be supported by remote participants who may e.g. be medical experts, consultants, technical support staff, associates of the patient, etc.

Another exemplary scenario may be a remote service application where a number of people may be present in order to e.g. service or repair technical equipment present in the room 103. The people present may include the day-to-day operators, a technical field engineer, a supervisor, etc. The scenario may be supported by remote people, such as for example one or more technical specialists in different parts of the equipment, operation support engineers, etc.

Yet another example may be a courtroom with audio based links to some participants, such as e.g. a defendant or some witnesses.

In such and similar scenarios, a plurality of people may be co-located and interworking with remote participants to often work together as a group to perform complex and potentially critical tasks requiring input and participation from a range of different people with different roles and expertise. This is supported by an audio distribution/ communication system which becomes critical in the efficient operation and interaction.

Whereas such scenarios can in many cases be supported by low complexity traditional audio conferencing systems, this tends to provide a suboptimal user experience and operation in many situations. In the following, an approach will be described which may typically provide improved operation and user experience, and typically will provide an approach that may allow an improved solution and completion of the task being performed.

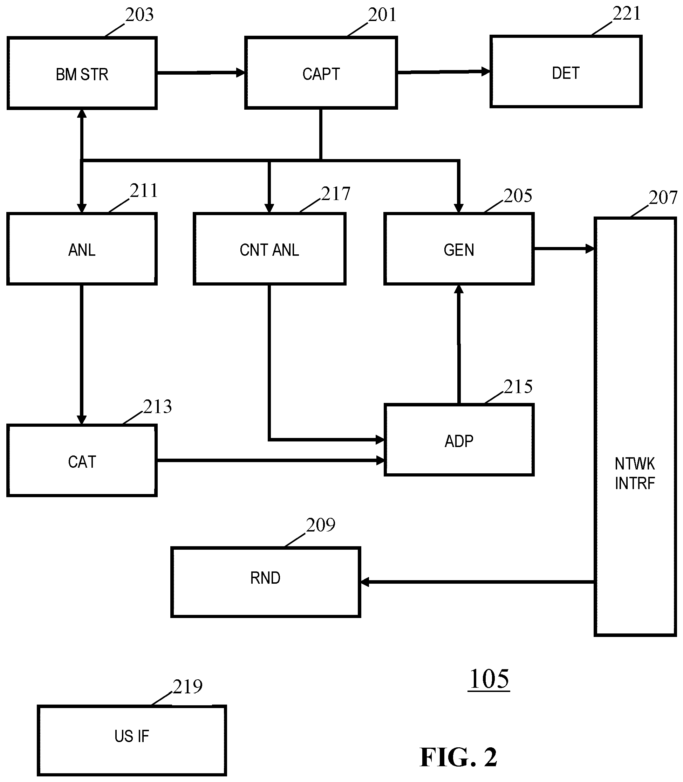

FIG. 2 illustrates an example of an audio apparatus that specifically may correspond to the audio communication apparatus 105 of the example of FIG. 1.

The audio communication apparatus 105 of FIG. 2 comprises an audio capturer 201 which is arranged to capture audio in an environment, and in the specific example it is arranged to capture audio in the room 103.

The audio capturer 201 is arranged to form a plurality of audio beams and to generate an audio capture signal for typically each audio beam of the audio beams.

It will be appreciated that many different approaches and algorithms for generating audio beams that provide a directional capturing of audio are known. For example, typically, directional audio capture may be achieved using a microphone array comprising a plurality of microphones/ audio capture elements e.g. arranged in a line. As is well known to the skilled person, by applying a suitable phase shift to the different microphone signals and combining these, it is possible to form directional audio capture with each capture signal corresponding to an audio beam being formed from the microphone array. **In** the example, the audio capturer 201 may be arranged to generate a plurality of such combined signals with each combined signal being an audio capture signal corresponding to a beam. The audio beams may be dynamically changed by dynamically changing the weights (phase) for each microphone.

It will be appreciated that other approaches for directional audio capture may be used in different embodiments. For example, in some embodiments, a plurality of directional microphones may each generate an audio capture signal and mechanical motors may be used to dynamically change the direction of the corresponding beams of the directional microphones.

The audio communication apparatus 103 further comprises a beam stearer 203 which is arranged to steer the audio beams formed by the audio capturer 201 and specifically is arranged to steer each of them towards an audio source, and typically towards different audio sources.

Many different techniques are known for directing audio beams towards audio sources, including both for detecting audio sources and for tracking audio sources after detection. The beam stearer 203 may use any suitable algorithm and specifically in many embodiments, an algorithm for dynamically adapting the weights of the beamforming combination of captured signals from a microphone array may be used.

Thus, the audio capturer 201 and beam stearer 203 may implement a functionality that captures a plurality of audio capture signals in a plurality of audio beams which are steered towards audio sources in the environment. The audio capture signal for a given audio beam thus typically represents an audio source captured by the beam.

The audio sources may specifically correspond to people present in the room, or may e.g. in some scenarios include other sound sources that may be present in the room. In some embodiments, additional circuitry may be included to differentiate and select audio sources corresponding to human speech, e.g. using complex speech detection or e.g. a low complexity detection based on more simple properties such as e.g. whether a frequency distribution matches that expected from speech. In other embodiments, beams may simply be steered towards e.g. more powerful audio sources and it may be assumed that this will result in speakers in the room being captured (and it may acceptable, or even advantageous, for the application that one or more beams possibly pick up a non-speaker audio source).

The audio capturer 201 is coupled to an audio generator 205 which is arranged to generate an audio output signal by combining the audio capture signals from the audio capturer 201. In some embodiments, the audio capture signals may be combined by being downmixed into a number of (sub)signals or channels that is lower than the number of audio capture signals. For example, the audio capture signals may be combined into a single mono or stereo signal. The audio generator 205 may then generate a combined encoded signal by encoding the downmix signal. In some embodiments, the downmix signal may be accompanied by parametric upmix data for recreating the individual audio capture signals.

In some embodiments, an encoded combined signal may be generated which includes the audio capture signals individually encoded and with the encoded data being combined into e.g. a single bitstream.

The audio generator 205 is in the example coupled to a communication unit 207 which is arranged to communicate with remote devices. The communication unit 207 may use any suitable communication approach to establish communication links with the remote devices 107. In some embodiments, the communication links may be direct (typically bidirectional) links, such as e.g. direct radio communication links or wired links. However, in most embodiments, the links may be formed via a network which specifically may be a general purpose network, and which in many embodiments may be the Internet. Thus, in many embodiments, the communication unit 207 may comprise a network interface, such as specifically an interface to the Internet, allowing it to communicate with the remote devices 107 using a suitable network technology/ Standard.

In the specific example, the audio generator 205 generates an encoded audio output signal that is fed to the communication unit 207 which may transmit it to one or more remote devices 107 via the Internet. This allows the captured audio to be rendered by the remote devices 107 such that the remote participants can hear the audio from the room 103.

In the specific example, the remote devices 107 comprise functionality for capturing local audio and transmitting it to the audio communication apparatus 103. For example, each remote device 107 may comprise a microphone capturing audio from the corresponding participant, encoding the audio, and transmitting the encoded audio data to the audio communication apparatus 103. The communication unit 207 may receive the encoded audio from the remote devices 107 and feed it to a renderer 209 which may be able to render the received audio signals. The rendered audio may be fed to a local sound transducer, such as a loudspeaker, which may project the audio into the room 103.

Thus, in some embodiments, the system may include functionality for receiving and rendering audio from remote devices/ participants in the main environment/ room. Thus, two way audio distribution and sharing may be employed. However, it will be appreciated that in other embodiments, no audio may be recorded or provided by one or more of the remote devices 107, and that indeed the audio communication apparatus 103 may in some embodiments not comprise any functionality for receiving audio from remote devices or for rendering any audio. The approach may still be highly useful for e.g. scenarios where remote participants may communicate through other means, such as e.g. by typing text that can be presented on a display in the room. In other examples, no communication may be provided from the remote devices/ participants to the room but e.g. the remote participants may perform actions that assist the activity in the room (e.g. selectively switching on/off equipment, providing test inputs, or controlling e.g. remote loads based on the audio received from the room 103).

In some embodiments and scenarios, the audio distribution may be supplemented by other communications and interactions, such as for example associated video distribution allowing remote participants to see what is happening in the room.

In the specific example, the audio communication apparatus 103 is however not merely arranged to capture and transmit audio to the remote devices 107. Rather, the audio communication apparatus 103 further comprises functionality for selectively adapting the output audio, and specifically for adapting the audio being transmitted to the remote devices 107.

The audio capturer 201 is in the audio communication apparatus 103 of FIG. 2 coupled to an analyzer 211 which is arranged to analyze one or more of audio capture signals to determine speech properties for audio of the corresponding audio capture signals.

For example, the analyzer 211 may be arranged to detect speech content of the audio capture signals and specifically may analyze each of the audio capture signals and determine speech content properties for each audio capture signals. The analyzer 211 may specifically be arranged to perform speech recognition to detect spoken words in one or more of the audio capture signals.

The analyzer 211 is coupled to a categorizer 213 which is arranged to determine a speaker category for the audio source of an audio capture signal. Typically, the categorizer 213 is arranged to determine speaker categories for all audio capture signals, or e.g. for all audio capture signals that are considered to be speech signals. For example, the categorizer 213 may include a speech detection criterion which is evaluated to determine whether the individual audio capture signals is considered to correspond to audio from an audio source in the form of a speaker or form a non-speaker audio source. Various techniques are known for detecting speech and any suitable approach may be used. As a low complexity example, the categorizer 213 may simply determine whether the audio source captured by a given audio capture signal is speech or not based on how many words are detected per time unit by a speech recognition process of the analyzer 211. The categorizer 213 may then proceed to determine a speech category for each audio capture signal considered to capture speech. Thus, the categorizer 213 may have a set of predetermined categories and the categorizer 213 may for each of one, more, or all of the audio capture signals select a category out of the set of predetermined categories. Thus, each audio capture signals that is considered to capture a speech signal may be assigned a category out of the set of (typically predetermined) categories.

The categorizer 213 is coupled to an adapter 215 which is further coupled to the audio generator 205. The adapter 215 is arranged to adapt the audio output signal based on the speaker category determined for the audio capture signal (and typically based on the categories determined for all of the audio capture signals). The audio communication apparatus 103 may accordingly be arranged to associate a speaker category to the audio capture signals that result from audio beamforming towards audio sources in the room. It may then adapt the audio that is transmitted to the remote devices based on these speaker categories. Thus, based on the category of the speaker the audio provided to the remote participants may be adapted/ modified.

As an example, the audio generator 205 may selectively attenuate, and specifically mute, individual audio capture signals or parts thereof based on the speaker category that is determined for that audio beam based on speech properties for the captured audio, and specifically based on the cognitive speech content, e.g. determined from detected words.

In some embodiments, the adapter 215 may be arranged to select which audio capture signals generated by the audio capturer 201 are included in the combination to generate the audio output signal based on the detected speaker categories.

The audio generator 205 may for example be arranged to exclude some speaker categories from the combined audio signal. Thus, the system may form beams that track individual speakers in the room and may then, based on the determined speaker category, generate a combined output audio signal in which audio capture signals for beams are included or excluded based on the speaker category. The system may accordingly automatically adapt the provided audio to only include some speakers but to exclude other speakers based on e.g. their role in the activity. For example, the remote participant may be able to hear the medical professionals in the medical examination room but not the patient or any relatives.

In many embodiments, the analyzer 211 may be arranged to detect words in the audio capture signal(s). It may generate speech properties based on these words, such as how many words are detected, how long they are, what type of category the words would fall into (e.g. by matching detected words to words stored in memory together with an associated word category). In many embodiments, the detected words may directly be used as the speech properties which are fed to the categorizer 213 and the categorization may be performed based on the detected words.

It will be appreciated that many techniques and algorithms are known for speech recognition to determine words and phrases in captured speech, and that any suitable approach may be used by the analyzer 211.

In many embodiments, the audio communication apparatus 103 may be arranged to perform speech recognition followed by a speech-to-text conversion with the subsequent processing then being based on the generated text. In some cases, the modification of the audio capture signal may also be based on the text. For example, the text may be processed and adapted followed by a text-to-speech operation that may generate an audio signal which specifically may be considered to be a modified version of the corresponding audio capture signal. The adaptation and modification of the text, and thus of the corresponding audio capture signal may be based on the detected speaker category for the audio capture signal.

In many embodiments, the determination of the speaker category based on detected words may be based on a Natural Language Processing, NLP, of the detected words. For example, the words (and phrases) detected by the analyzer 211 may be converted into text which is then processed by an NLP process that may determine properties of the speech that can be used to determine the speaker category.

As a specific example, the detected speech from the audio capture signals may be provided to an NLP module of the categorizer 213 which may proceed to determine the speaker category based on an NLP based classification algorithm. Each speaker category may for example correspond to a role in the activity such as consultant, surgeon, patient, nurse, relative, technical support, lab technician etc for the medical example, or to user, service engineer, specialist, operator, etc for the technical service example.

An NLP based classification model can be built to determine the speaker category, and specifically the role of each participant.

As an example, in order to create such a model, a basic model may be trained with suitable data that represents all the possible participants and their roles. Preparation/generation of training data may be implemented with the training dataset containing data points specific to each particular role (e.g. for a profile patient and family the following guides/ rules may be used: they never use any technical words/phrases when in the procedure/lab room, they mostly use disease related words and phrases (here also emotions derived from those words or phrases can be used as additional parameters)). Once such profile specific data is prepared, the classification model can be built using such data as training dataset.

Actor specific data may be used to train the basic model. The actor specific data may comprise specific words or phrases (that he/she may use during conversation in the diagnostic exam room) that represent the category of the actor. Such, words, phrases and sentences are then processed using NLP technique (stemming, Parts of Speech (POS) tagging, word embedding etc.) to extract the unique feature vectors, these feature vectors can be used to train a machine learning model for actor classification, a neural network architecture can be used to create the model.

Once the model is generated (and properly trained/ adapted), the audio capture signal data, e.g. in the form of the speech properties corresponding to detected words/ phrases/ sentences, is used as input to the model. Typically, the input to the model may be in the form of text, and the detected speech may have been converted into suitable text by the analyzer 211. The model may then proceed to classify the audio source of the audio capture signals to be one of the categories/ roles.

For example, based on the trained model, the categorizer 213 may determine the speaker category by extracting the feature vector from the text (transformed from speech) and then use it as input to the model to identify the actor. If the actor is a patient family member then the feature vector contains unique values particular to him/her and the classifier model is trained to identify such unique feature values.

In some embodiments, the audio communication apparatus 103 may as mentioned be arranged to select which audio capture signals, and thus which speakers, are included in the generated output audio signal(s). The selection may be dynamic, and thus may be modified and changed depending on the current conditions.

In some embodiments, the audio communication apparatus 103 comprises a content analyzer 217 which is arranged to analyze segments of the audio capture signal to determine a content category for the segments. Thus, in addition to a speaker category being determined for the individual beams/ audio capture signals/ audio sources/ speakers, the audio communication apparatus 103 may further categorize individual segments of the audio/ speech in accordance with a suitable content class.

The adapter 215 may further be arranged to adapt the audio output signal based on the determined content categories.

In many embodiments, the adapter 215 may be arranged to adapt a level of audio segments, and specifically to attenuate segments, in response to the content category determined for the segments. In many embodiments, the adapter 215 may be arranged to control the audio generator 205 to attenuate segments assigned to one content category but to not attenuate segments assigned to another category.

In such an embodiment, the audio communication apparatus 103 may thus for example be arranged to determine specific audio segments that correspond to a specific content category and a specific speaker category, and to attenuate, and often fully mute, such segments.

For example, in a remote service application, the audio communication apparatus 103 may detect that a remote service engineer may refer to specific detailed information that may be confidential and which the service engineer may not be authorized to communicate to the third parties. Such, information may however be validly disclosed by e.g. the local client being supported, e.g. the client may be authorized to disclose the information. The audio communication apparatus 103 may detect segments that are classified to correspond to such restricted disclosures and then to remove it from the audio output signal if the segments are found in an audio capture signals associated with a speaker category that is not authorized to disclose such information. However, if the speaker category is one corresponding to a speaker category that is authorized to disclose the information, the segments are not removed.

As another example, in the medical scenario, one of the content categories may be associated with personal information and thus segments expressing e.g. names, addresses, emails, account numbers, dates (birthdays) etc. may be assigned this content category. The adapter 215 may control the audio generator 205 to remove such personalized information from the output stream. For example, the patient may be asked for personal data as part of a test (e.g. a dementia test) with such information being removed from the audio output signal. However, if a specialist or doctor includes any names or telephone numbers (e.g. as part of the conversation with relatives) then this information is included in the audio output signal.

In many embodiments, the speaker categories may correspond to different levels of authorization to disclose information. The content categories may be associated with different levels of secrecy. Thus, in many embodiments the speaker categories may be associated with different sets of content categories that a speaker of that speaker category is authorized to disclose. The adapter 215 may be arranged to mute segments assigned to content categories for which the speaker category for the audio capture signal/ speaker is not authorized to disclose information.

It will be appreciated that various algorithms and approaches for determining content information and identifying a content for e.g. spoken words and sentences are well known and that the skilled person may use any such suitable known approach.

In particular, in many embodiments, NLP processing may be used to determine the content category and indeed the same NLP module and processing as used for the speaker categorization may be used in many embodiments. For example, speech recognition may be performed with the detected words being converted into text and with NLP processing being applied to the resulting text. Examples of suitable NLP processing techniques are e.g. tokenization, stemming, word embedding and context embedding.

In more detail, the NLP module may initially perform free speech de-identification. For example, text de-identification techniques may be applied to remove parts of phrases which contain sensitive information. For example, mentioning of patient's name, age etc. This de-identification may have different depth levels ranging from removing all identifiers to partially de-identifying the data. The approach may allowing the implementation of various clearance levels according to preferences of the application.

The detection of words/phrases for de-identification can be achieved by performing Named Entity Recognition (NER) on the text/sentences to classify the name-entities/words into predefined categories such as person, organization, location etc.

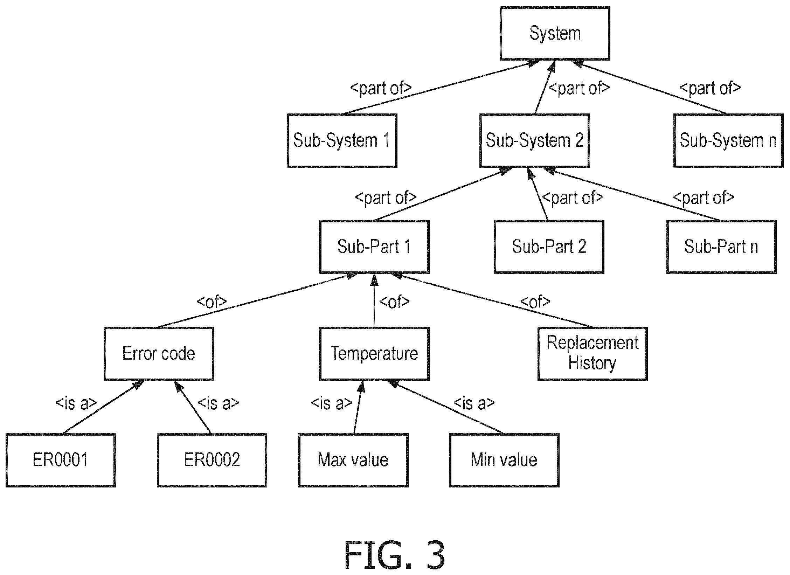

Such NER methods may not be ideally trained, so there is a potential chance of miss-classification of important data (e.g. speech that is important and related to e.g. diagnosis or service and which should be communicated may instead be muted). In some embodiments, this may be mitigated by using a knowledge graph (with relation between nodes) that is specific to any technical conversation between the local participants and the remote participants. An example of such a graph is illustrated in FIG. 3. After NER identification, the identified words of segments to exclude can be further checked with such a knowledge graph and if found as a node of the graph, then the NER identification may be modified. This may reduce the risk of important data/information loss during the de-identification process.

After de-identification, i.e. after the segments to be removed have been identified, the audio capture signal segments (e.g. the audio signals/ waveforms) of the segments to be included in the audio output signals may be assembled and joined together to form an uninterrupted audio stream. The resulting audio output signal may then be transmitted to the remote devices/ participants 107.

As an example, the speech recognition may detect and segment the audio capture signals into audio fragments which are represented by text that is fed to the NLP module. A speaker category and content category may be assigned to each segment. Each segment may e.g. be associated with a time stamp. When ordering by time stamps, phrases form a chat room-like dialogue captured in audio phrases. Segments may e.g. be individual words, or individual words in a segment may be marked with timestamps identifying the beginning and/or ending of a word. The generation of the output signal by combining audio fragments/ segments while possibly removing some fragments/ segments may be based on the time stamps. Essentially, all the audio fragments corresponding to segments that are intended to be included (e.g. not comprising sensitive information or from a suitably authorized participant) are included in the combination. However, for time instances corresponding to segments that are identified to not be included, the corresponding audio fragment is not included in the combination. For example, for time intervals corresponding to these segments, the audio capture signals for the corresponding beam may be replaced by another audio signal or may simply be set to a zero signal (e.g. a silence signal having a zero amplitude). In some embodiments, the audio capture signals for the segments to be muted may e.g. be replaced by (e.g. predetermined) default audio clips/ signals. For example, a white noise or tone signal may be used to replace the audio capture signals during segments for which the audio capture signals include content that should not be included in the audio output signal.

In some embodiments, the audio communication apparatus 103 may be arranged to only include the strongest audio capture signals (e.g. the currently highest level/ amplitude) in output audio signal. The audio generator 205 may receive the audio capture signals from the focused beams together with an identity of the beams and the speaker categories of the beams. It may then determine the category of the speaker of the strongest audio capture signal, and thus specifically the role of the currently strongest source/ speaker. Depending on the category, the adapter 215 may control the audio generator 205 to include this audio in the audio output signal or whether to block this audio from transmission to remote participants.

In many embodiments, the audio generator 205 may be arranged to generate a plurality of different audio output signals. In particular, it may generate different audio output signals for different remote devices/ participants 107. Specifically, the audio generator 205 may be arranged to generate an output audio signal for a first remote participant and a second, and different, output audio signals for a second participant. The signals may then be transmitted to the different corresponding remote devices 107. The generation of the different audio output signals may e.g. be by including different audio capture signals, and specifically different segments/ audio fragments, in the downmix resulting in the two output audio signals.

The adapter 215 may be arranged to individually adapt the audio output signals for the different users/ remote participants. This adaptation may be in response to the speaker category and to a property of the user. For example, the users may be associated with a level of authorization or clearance and the audio output signal that is provided to each user may depend on this level. For example, a participant may have a high level clearance to hear all communication in the room (for example a court stenographer for the room being a court room) whereas another participant may only be cleared for basic information (for example a member of the public attending a court case out of general interest). The adapter 215 may for example, allow one remote participant to hear audio from all participants and thus include all audio capture signals in the output audio signal. However, for another user with lower clearance, only some speaker categories may be allowed and the audio capture signal for a speaker identified to belong to another speaker category may be muted. For example, a court stenographer may hear all audio whereas members of the public may only hear a subset of speakers, e.g. may not hear any witnesses that are under protection.

The property of the users used to adapt the audio output signal may be an access authorization property indicative of an allowable degree of access to at least one category of information for the user.

In some embodiments the adapter 215 may further be arranged to individually adapt the audio output signals in response to content categories for the audio segments. For example, whereas some remote participants may be authorized to hear personal information, other remote participants may not be authorized to hear such information. In this case, audio segments comprising personal information may be removed from audio output signals for remote participants in the second category but not from audio output signals for remote participants in the first category.

It will be appreciated that the adapter 215 may implement the adaptation in any suitable way. For example, in some embodiments, a fixed rule based approach may be used where the rules define what content category and speaker category combinations are to be included and which are to be excluded in the audio output signal. Separate rules may exist for different users/ remote participant properties. For example, a set of user/ remote participant categories may be defined and for each category, a specific set of rules may be implemented. A remote participant may be associated with a specific category (e.g. set by the user or by an operator/ controller of the session) and when generating an audio output signal for that user, the rules for that specific category may be used by the adapter 215.

In many embodiments, the audio communication apparatus 103 may be arranged to employ various techniques to dynamically adapt and change which sound sources, and specifically speakers, are being tracked.

In many embodiments, the audio communication apparatus 103 may comprise functionality for detecting an audio source not being an audio source of the audio capture signals/ beams, i.e. it may detect a new audio source which is currently not being tracked by any of the beams. Specifically, the audio capturer 201 may detect a new audio source that is currently not associated with any of the audio capture signals or the formed beams.

As an example, the audio capturer 201 may generate a variable audio beam that may change direction under the control of the beam stearer 203, and which may be controlled to search for new audio sources. Such an audio beam may be referred to as a search or variable beam whereas audio beams tracking an audio source may be referred to as a focused beam.

The audio capturer 201 may generate a rotating or moving beam which may pause if a strong audio signal is detected. When this happens, the audio capture signal of the rotating beam may be correlated with the audio capture signals of the beams currently tracking an audio source. If the correlation is sufficiently high, and e.g. the beam direction is sufficiently close, to that of an existing audio capture signal, it is considered that the audio source is not a new audio source but rather an already tracked audio source. However, if the correlation is low and/or the direction is very different, it is considered that a new audio source has been detected.

Thus, it may be determined whether there is a match between a potential new audio source being detected and any audio source towards which any audio beam is steered, i.e. which is tracked by a focused beam. The determination of whether there is a match is based on a comparison of a property of the variable audio beam and a property of the focused beams and/or on a property of an audio capture signal for the variable audio beam and a property of audio capture signals for the focused audio beams. For example, if the audio signals from the beams are sufficiently correlated and the direction of the audio beams are sufficiently close, then a match may be considered to be determined. If there is a match, then it is determined that the detected audio source is an already tracked audio source, and otherwise it is determined that a new audio source has been detected.

When a new audio source is detected, the beam stearer 203 may be arranged to switch an audio beam from being directed to a previous audio source to be directed to the new audio source. Typically, the number of beams that can be implemented to accurately track audio sources is quite limited, e.g. only five beams may possibly be generated at the same time. This restricts the number of different audio sources that can be tracked simultaneously to a low number. The audio communication apparatus 103 may be arranged to dynamically switch the limited number of beams to track the most appropriate sound sources, such as for example mainly the loudest or e.g. the most active sound sources.

However, in the approach of the audio communication apparatus 103 of FIG.2, the selection of which sound sources are being tracked may also depend on the determined speaker category. In particular, when switching one of the audio beams to a newly detected audio source, the beam stearer 203 may select which beam to assign to the newly detected audio, and thus may select which previous audio source/ beam/ audio capture signal is dropped in order to reassign the beam, based on the speaker category.

For example, each speaker category may be assigned a priority such that the speaker categories may ranked/ ordered relative to each other. For example, for an operating theatre, the surgeon speaker category may be prioritized highest, followed by a medical expert speaker category, followed by a patient speaker category, followed by a medical support staff speaker category, followed by a relatives speaker category. For a courtroom scenario, a judge speaker category may be assigned the highest priority, followed by an attorney speaker category, followed by a witness speaker category, followed by a speaker category including all other roles.

The beam stearer 203 may specifically select the beam to be reassigned in order of increasing priority such that the beam is selected as one being assigned to a speaker/ audio source which belongs to the lowest priority of the currently assigned beams.

Such an approach may provide an improved and typically fast adaptation of the available beams to developments and changes in the scenario, and specifically may provide efficient adaptation to changes in the speakers present or active in the room, while at the same time seeking to ensure that the most important information is provided to remote participants.

In some embodiments, the audio communication apparatus 103 may further comprise functionality for facilitating and/or improving adaptation to a new audio source. In particular, the audio communication apparatus 103 may comprise means for storing data related to currently tracked/ detected audio sources including storing an indication of the assigned speaker category. When a new audio source/ signal is detected, the audio communication apparatus 103 may detect stored data to evaluate whether the audio source is one that has been tracked previously. If so, the stored speaker category may be extracted and used e.g. as an initial speaker category for the new source.

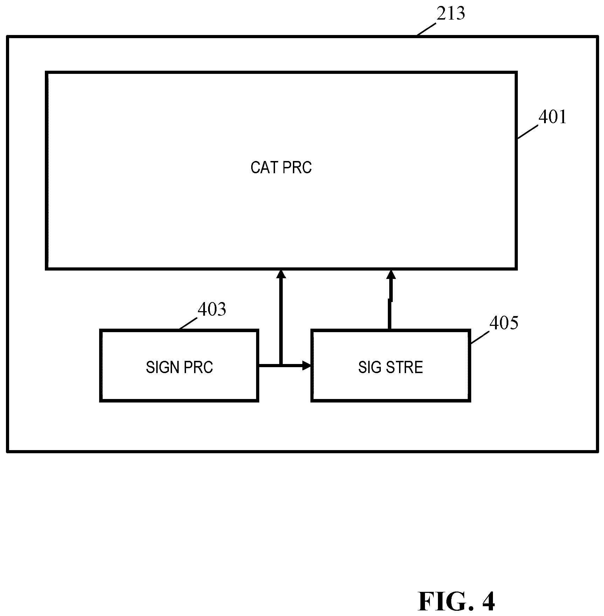

As an example, the categorizer 213 may, as illustrated in FIG. 4, in addition to a main categorization processor 401, which performs the speaker categorization as previously described, further comprise a signature generator 403 and a signature store 405.

The signature generator 403 may generate signatures for audio sources based on the frequency distributions of the audio capture signals for the audio sources. A signature for an audio source may be distinctive mark, characteristic, or property that can be generated from an audio capture signal. Signatures for audio capture signals for different audio sources will tend to be different.

As an example, for an audio capture signal that is detected to belong to a speaker category, the signature generator 403 may proceed to determine a frequency distribution by repeatedly performing an FFT on the audio capture signal. The resulting frequency spectrum may be averaged, and from the averaged frequency spectrum a signature may be generated. In some cases, the frequency spectrum may directly be used as a signature. In other embodiments, some processing/ analysis of the frequency spectrum may be performed. For example, the smallest frequency interval comprising e.g. 70% of the total energy may be determined and used as a signature.

The signature generator 403 may be arranged to store the determined signatures for audio sources in the signature store 405. In addition to the signature, further information of the audio source may be stored. Specifically, the determined speaker category for the audio source may be stored and linked to the signature. Thus, after some time, the signature store 405 may be populated with a range of signatures and associated speaker categories.

The categorizer 213 may be arranged to determine the speaker category for audio sources based on the stored signatures. Specifically, when a new audio source is detected, the signature generator 403 may proceed to generate a signature for the new audio capture signal for that audio source. The signature generator 403 may specifically compare the new signature to the ones stored in the signature store. If a match is found (in accordance with any suitable match/ similarity criterion) then the signature generator 403 may extract the linked speaker category and assign this to the new audio source.

In some cases, the determination of the speaker category for a new audio source may simply be by assigning it to the speaker category stored for a matching signature. This may e.g. be the case if the match is very close. In other embodiments, or for less close matches, the stored signature may be used as an initial speaker category or as an initial candidate speaker category. Such an approach may still require the categorization process to be performed but will typically require less analysis and audio data to be evaluated before a speaker category can be assigned.

In many practical examples, the audio capturer 201 may comprise multiple adaptive beamformers, such as e.g. beamformers described in WO2017EP84679A. The beamformers may be based on block processing. For audio signals at 16 kHz, typically frames of 256 samples may be used. For each frame, all beamformers may calculate their outputs to provide the corresponding audio capture signal for the frame. Further, per frame, the audio communication apparatus 103 may determine which beams are active and whether or not a new beam should be formed for a new audio source.

A free running (variable) audio beam may be formed by an adaptive beamformer, such as e.g. described in US 7 146 012 or US7602926. Based on the generated audio capture signal for the free running beam, potential new audio sources may be detected.

In some cases, only one of the audio capture signals is selected in each frame. For example, categorization and e.g. speech recognition and/or NLP processing may only be performed on the strongest signal in each frame. The following operation may be used:

1. If the strongest source is in one of the focused beams tracking an audio source or e.g. being fixed in one direction, it may be checked whether the distance between the free running beam and the focused beam is small. If so, it is likely to mean that the Signal-to-Interference is sufficiently high for the free running beam to capture the source, and one of the focused beams may be updated to track this new source. The strongest audio capture signal, or in some cases all audio capture signals, may be provided to the analyzer 211 and categorizer 213, and possibly to the content analyzer 217. These may then proceed to categorize the speaker and/or content.

2. If the free running beam has the strongest source, then it may be determined whether there is a focused beam close to the free running beam (e.g. using a distance determination approach as disclosed in WO2017EP83680A).

a. If no overlapping beam is found, then a new beam is created, by copying the coefficients for the free running variable beam to the new focused beam. In case the maximum number of focused beams has already been reached, a focused beam has to first be deleted. The selection of which beam has to be deleted can be done on different criteria, specifically as previously described the speaker category/role of the speaker in the beam may be considered (technical and clinical staff will for example receive more priority than clerical/office staff, patients, visitors/family members etc.), and in a secondary step where multiple actors have the same role the amount of activity during the last period, the energies in the beam when active, distances between beams, and all kind of combinations may be considered.

b. If an overlapping beam is found with a small distance, no action will be taken in some embodiments. It may in this case be assumed that the focused beam automatically can adapt itself to the right solution. In case the distance is larger, then the beamforming may be reinitialized with the coefficients of the free running beam.

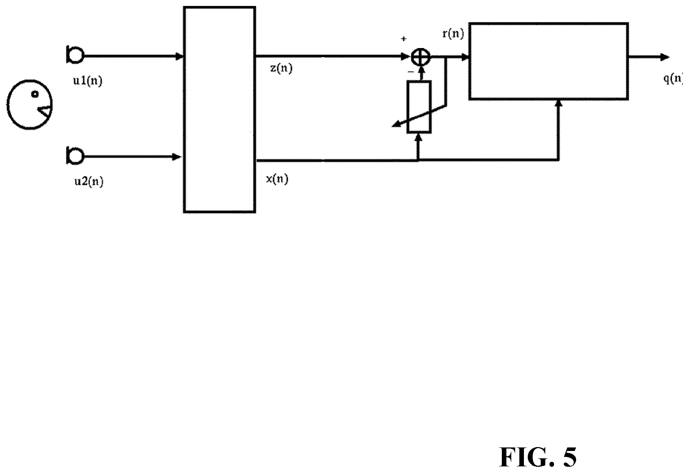

FIG. 5 illustrates a typical example of how a focused beam may be generated. The approach includes at least an adaptive beamformer that generates a desired signal and noise references. A second adaptive filter may be used for cancelling coherent noise or other audio sources. Additionally, non-linear post-processing may be applied for further cleanup of the desired signal.

In many embodiments, the architecture and implementations of the beamformers for the focused/ dedicated/ tracking/ focused beams are the same as for the free-running variable beam, and e.g. uses the same filter lengths etc. The adaptation control may be different, however. The free running beamformer may always adapt to form beams towards the strongest audio signals whereas the focused beamformers may have a more selective adaptation approach. For example, the focused beamformers may only adapt when the signal to noise ratio is sufficiently high, when speech is detected etc. For example, approaches as disclosed in WO2018EP50045A may be used to provide a robust approach.

In many embodiments, the audio capturer 201 may comprise a user interface 219, and specifically an output user interface 219 which may present information to participants in the room. In many embodiments, the audio capturer 201 may include a display or a display interface which may be used to present visual information to the user.

In many embodiments, the audio capturer 201 may be arranged to present information to the participants about the speaker categories that are being assigned to different audio sources and beams.

In particular, in many embodiments the audio communication apparatus 103 may include a detector 221 which is arranged to detect that an active audio capture signal comprises a currently active speech signal. For example, the detector 221 may continuously evaluate all audio capture signals to detect whether speech is currently present in the signal and thus whether the sound source being tracked is a speaker and whether that speaker is currently speaking.

It will be appreciated that different approaches for speech detection by the detector 221 may be used. In some embodiments, the speech detection may simply be by detecting whether the audio capture signal represents audio above a given threshold level. This may for example be adequate in scenario where the only sound expected is that of people speaking, and thus any sound captured can be assumed to be speech. In other embodiments, more complex algorithms may be used, including e.g. evaluating frequency spectra (e.g. distribution, presence of harmonics etc.), dynamic changes (e.g. transients) etc. In some embodiments, the detection may be based on the result of the speech recognition (although this may in many scenarios be too slow). It will be appreciated that many different algorithms for speech detection are known and that any suitable approach may be used.

The user interface 219 may be informed of which audio capture signals/ audio beams/ audio sources is currently considered to be an active speaker. It may then proceed to present/ output an indication of the speaker category assigned to these capture signals/ audio beams/ audio sources. For example, in some embodiments, a display may show a list of all the roles of the people that are currently actively speaking.

In some embodiments, the detector 221 may not only detect which audio capture signals currently comprise speech and thus who is currently speaking, but may further be arranged to determine a single dominant speaker. For example, the audio capture signal for which a strongest signal is detected may be determined and may be considered to be the dominant speaker. Such an approach will tend to be highly reliable in scenarios where a single person is typically speaking at a time, such as e.g. in a courtroom.

In such a case, the user interface 219 may for example be arranged to display an indication of the speaker category of the single speaker rather than for a plurality of speakers. In such a scenario, the users may accordingly be presented with an indication of the role of the current speaker with this changing dynamically as different participants speak.

In some embodiments, the audio generator 205 may be arranged to select a single audio capture signal/ audio beam/ audio source/ speaker based on the speaker categories. For example, if a plurality of speakers are detected to currently be active, and specifically if it is detected that a plurality of audio capture signal currently comprise speech signals, then a single speaker/ signal may be selected based on the speaker category. For example, as previously described, the speaker categories may be associated with a relative priority and the single audio capture signal/ speaker may be selected as the audio capture signal associated with the highest priority group. In some embodiments, an indication of the speaker category of the single speaker rather than for a plurality of speakers may then be presented. In such a scenario, the users may accordingly be presented with an indication of the role of the highest priority currently active speaker.

In many embodiments, the audio communication apparatus 103 may be arranged to transmit metadata to the remote devices/ participants. The metadata may include indications of at least one of the speaker categories. For example, rather than present an indicator of the speaker category on a display as described above, data indicative of the speaker category(ies) of the currently active speaker(s) may be included in the bitstream. The remote devices may include functionality for extracting the metadata and for presenting information of the speaker category (such as a speaker role) to the remote participants.

In some embodiments, the user interface may alternatively or additionally be arranged to present an indication of the segments of the audio capture signal that are attenuated or specifically muted. For example, a low volume tone may be generated during times where one or more audio segments is muted and not included in the output audio signals. In other embodiments, an indication may be provided on a display when a segment is attenuated. In some embodiments, a simple binary indication may be provided but in other embodiments more detailed information may be provided. For example, an indication of the content category for the muted audio segments may be presented to the participants in the room. Such an approach may provide advantageous feedback to the participants. For example, if segments are muted because they contain confidential information, such as personal information, an indication may be presented on a display warning that a speaker is currently disclosing such personal information. This may for example reduce the risk of unintended disclosure of information by participants.

In some embodiments, the combination of the output audio signals for a given user may be dependent on the speaker categories assigned to the audio capture signals, and specifically the adapter 215 may be arranged to control the audio generator 205 to adapt one or more combination weights for the audio output signals based on the assigned categories.

The combination weight for an audio output signal may be a weighting of the audio capture signal relative to weights of other audio output signals when combining the audio output signals into the output audio signals. Specifically, the combination weight for given audio output signal may correspond to a relative gain for the audio output signal when combining/ mixing with other audio capture signal.

For example, in some embodiments, a specific speaker category, e.g. corresponding to a judge, surgeon, or on-site service engineer, may be considered to be of particular importance, and accordingly the gain for any audio capture signal associated with such a speaker category may be set to a higher level when mixed with other audio capture signals.

This may result in an audio output signal being generated where the speakers of specific categories are easier to hear.

In some embodiments, the speaker categories may as previously mentioned be associated with different priorities. In such cases, the gain/ combination weights for audio capture signals may be set in response to the priorities for the speaker categories associated with the audio capture signals. For example, the higher the priority, the higher the gain/ combination weight may be set.

Thus, in some embodiments, the audio capture signal may prioritize signals in the audio output signal by setting relative gains/ combination weights depending on the speaker categories/ priorities. This may e.g. be useful when multiple speakers are talking at the same time and are all included in the audio output signal. Based on the speaker categorization, the audio capture signal may decide to give a more important speaker (e.g. chairman) a slightly higher gain then the other speakers in the output audio signal.

In some embodiments, the speaker categorization may take into account a context of the ongoing conversation.

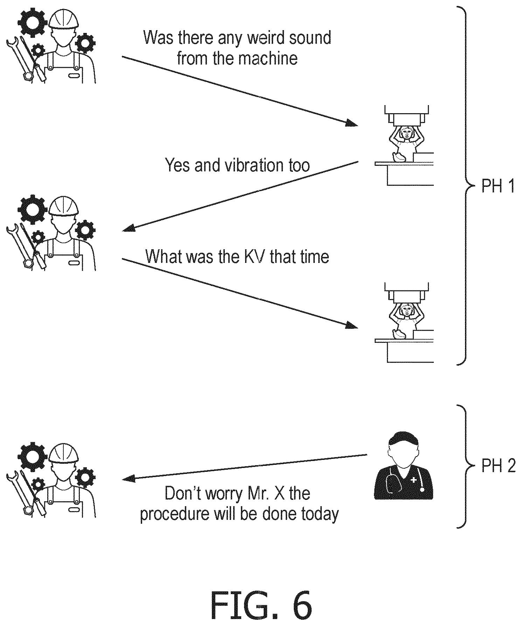

For example, a methodology to determine speaker categories/ roles for the participants captured by the focused beams is to consider the context of the ongoing conversation between the remote party(ies) and the participants in the room. FIG. 6 shows such a scenario where a Remote Service Engineer, RSE, from a remote location is in conversation with a lab technician regarding a reported issue. In the example there is a particular context of their conversation. During the conversation, whenever a new sentence is received from one of the actors (RSE or technician), the context of that sentence can be matched with the ongoing conversation sentence context to decide if the new sentence is part of the current conversation and if it is coming from the right participant. If there is a sentence captured by the focused beam coming from another actor (e.g. a physician is saying something to the patient/family containing sensitive information), then the sentence will not match with the context of ongoing conversation, in this way the role of the participant can be determined and the sentence can be discarded.

The key steps of such an approach may include:

- When a new sentence/text is detected from one of the audio beams in an ongoing conversation, the previous conversation sentences/texts and the new sentence/text is passed through a context extractor module. Such a module may include the following operations:

    - Sentence Tokenizer: The sentence/text is first tokenized into list of tokens as a pre-processing step.
    - Stemming and Stop word removal: The next step is stemming or lemmatization of words into its base form. As different form of a word has the same context, its base form is used for natural language processing. A pre-processing step removal of the stop words (like "is", "and", "or" etc) may also be performed.
    - Word embedding: Word embedding represents words in a vector space where similar words are mapped near each other based on the context of usage.
    - Context embedding: Context embedding represents the temporal interaction or context of the words in a vector space.

The output of this module may be two context vectors representing the context of both types of sentences/text.

- The next step may calculate the similarity of these two context vectors using a suitable similarity function, which outputs a similarity score, e.g.

$$\text{Score}_{\text{context}} = \text{Similarity}(\text{Context\_Vector}_{\text{prev}}, \text{Context\_Vector}_{\text{new}}$$

- The similarity score may then be compared to a threshold to determine whether the new sentence/text coming from the output of the focused beam is part of the conversation, or whether it is coming from another person who is present in the room but not part of this conversation.

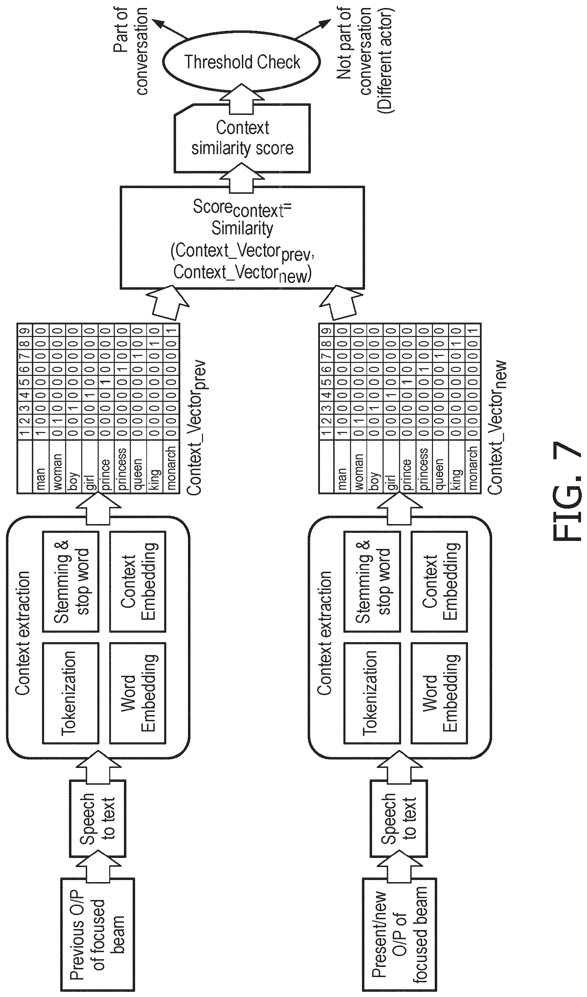

FIG. 7 illustrates an example of an overall methodology that may be used to derive/calculate the context similarity of a new sentence/text detected in an audio beam with respect to the ongoing conversation.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed, the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. **In** the claims, the term comprising does not exclude the presence of other elements or steps.

Furthermore, although individually listed, a plurality of means, elements, circuits or method steps may be implemented by e.g. a single circuit, unit or processor. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

Generally, examples of an audio apparatus, a method of operation for an audio apparatus, and a computer program which implements the method are indicated by below embodiments.

## Claims

1.  An audio apparatus comprising:

    an audio capturer (201) arranged to capture audio in an environment, the audio capturer (201) being arranged to form a plurality of audio beams and to generate an audio capture signal for each audio beam of the plurality of audio beams;
    a beam stearer (203) arranged to steer each audio beam of the plurality of audio beams towards a different audio source;
    an analyzer (211) arranged to analyze at least a first audio capture signal to determine speech properties for audio of the first audio capture signal;
    a categorizer (213) arranged to determine a first speaker category out of a plurality of speaker categories representing a role of a speaker for a first audio source of the first audio capture signal in response to the speech properties;
    an audio generator (205) arranged to generate a first audio output signal for a first user by combining audio capture signals including the first audio capture signal; and
    an adapter (215) arranged to adapt the first audio output signal in response to the first speaker category and an access authorization property indicative of an allowable degree of access to at least one category of information for the first user.

2.  The audio apparatus of claim 1 wherein the audio generator (205) is further arranged to generate a different second audio output signal for a second user by combining audio capture signals including the first audio capture signal; and the adapter (215) is arranged to individually adapt the second audio output signal in response to the first speaker category and a property of the second user.

3.  The audio apparatus of claim 1 or 2 wherein the analyzer (211) is arranged to detect words in the first audio capture signal, and to determine at least a first speech property of the speech properties in response to the detected words.

4.  The audio apparatus of claim 3 wherein the analyzer (211) is arranged to determine the first of the speech properties in response to a Natural Language Processing, NLP, of the detected words.

5.  The audio apparatus of any previous claim wherein the adapter (215) is arranged to select which audio capture signals of the plurality of audio capture signals are included in the combination to generate the first audio output signal in response to the first speaker category.

6.  The audio apparatus of any previous claim further comprising a content analyzer (217) which is arranged to analyze segments of the first audio capture signal to determine a content category for the segments out of a plurality of content categories; and wherein the adapter (215) is arranged to adapt the first audio output signal in response to the content categories.

7. The audio apparatus of claim 6 wherein the adapter (215) is arranged to attenuate segments of the first audio capture signal for at least one content category and first speaker category combination, and to not attenuate segments of the first audio capture signal for at least one other content category and first speaker category combination.

8. The audio apparatus of claim 7 comprising a user interface (219) for presenting an indication of the segments being attenuated.

9. The audio apparatus of any previous claim wherein the categorizer (213) comprises:

   a signature generator (403) for generating signatures for audio sources in response to frequency distributions of the audio capture signals for the audio sources;
   a store (405) for storing signatures for audio sources linked to speaker categories determined for the audio sources; and wherein
   the signature generator (403) is arranged to generate a first signature for the first audio source in response to the first audio source being detected; and
   the categorizer (213) is arranged to determine a match between the first signature and a stored signature stored in the store (405), and to determine the first speaker category for the first audio source in response to a speaker category linked to the stored signature.

10. The audio apparatus of any previous claim wherein the audio capturer (201) is arranged to detect a new audio source, and the beam stearer (203) is arranged to switch an audio beam from being steered towards a previous audio source to be steered towards the new audio source in response to the detection of the new audio source, and to select the previous audio source from a plurality of audio sources to which beams are steered in response to a speaker category of the previous audio source.

11. The audio apparatus of any previous claim further comprising

   a detector (221) for detecting an active audio capture signal comprising a currently active speech signal; and
   a user interface (219) for presenting an indication of a speaker category assigned to an audio source of the active audio capture signal.

12. The audio apparatus of any previous claim wherein the audio generator (205) is arranged to adapt at least one combination weight of the audio capture signals in response to the first speaker category.

13. The audio apparatus of any previous claim wherein the audio capturer (201) is arranged to generate a variable audio beam and the beam stearer (203) is arranged to

   vary the variable audio beam to detect a potential new audio source;
   determine if there is a match between the potential new audio source and any audio source towards which any beam of the plurality of beams is steered, the determination of whether there is a match being in response to a comparison of at least one of a property of the variable audio beam and a property of audio beams of the plurality of audio beams, and a property of an audio capture signal for the variable audio beam and a property of audio capture signals for the plurality of audio beams; and
   switch an audio beam from being directed to a previous audio source to be directed to the potential new audio source if no match is detected.

14. A method of operation for an audio apparatus, the method comprising:

   capturing audio in an environment by forming a plurality of audio beams and generating an audio capture signal for each audio beam of the plurality of audio beams;
   steering each audio beam of the plurality of audio beams towards a different audio source;
   analyzing at least a first audio capture signal to determine speech properties for audio of the first audio capture signal;
   determining a first speaker category out of a plurality of speaker categories representing a role of a speaker for a first audio source of the first audio capture signal in response to the speech properties;
   generating a first audio output signal for a first user by combining audio capture signals including the first audio capture signal; and
   adapting the first audio output signal in response to the first speaker category and an access authorization property indicative of an allowable degree of access to at least one category of information for the first user.

15. A computer program product comprising computer program code means adapted to perform all the steps of claim 15 when said program is run on a computer.

**Patentansprüche**

1. Audioeinrichtung, umfassend:

   eine Audioerfassungseinheit (201), die angeordnet ist, um Audio in einer Umgebung zu erfassen, wobei die Audioerfassungseinheit (201) angeordnet ist, um eine Vielzahl von Audiostrahlen zu bilden und ein Audioerfassungssignal für jeden Audiostrahl der Vielzahl von Audiostrahlen zu erzeugen;
   eine Strahllenkereinheit (203), die angeordnet ist, um jeden Audiostrahl der Vielzahl von Audiostrahlen auf eine andere Audioquelle zu lenken;
   eine Analysatoreinheit (211), die angeordnet ist, um mindestens ein erstes Audioerfassungssignal zu analysieren, um Spracheigenschaften für Audio des ersten Audioerfassungssignals zu bestimmen;
   eine Kategorisierereinheit (213), die angeordnet ist, um eine erste Sprecherkategorie aus einer Vielzahl von Sprecherkategorien zu bestimmen, die eine Rolle eines Sprechers für eine erste Audioquelle des ersten Audioerfassungssignals als Reaktion auf die Spracheigenschaften darstellen;
   eine Audioerzeugungseinheit (205), die angeordnet ist, um ein erstes Audioausgangssignal für einen ersten Benutzer zu erzeugen, indem er Audioerfassungssignale, einschließlich des ersten Audioerfassungssignals, kombiniert; und
   eine Adaptereinheit (215), die angeordnet ist, um das erste Audioausgangssignal als Reaktion auf die erste Sprecherkategorie und eine Zugriffsberechtigungseigenschaft anzupassen, die einen zulässigen Grad des Zugriffs auf mindestens eine Kategorie von Informationen für den ersten Benutzer angibt.

2. Audioeinrichtung nach Anspruch 1, wobei die Audioerzeugungseinheit (205) weiter so angeordnet ist, dass sie ein anderes zweites Audioausgangssignal für einen zweiten Benutzer erzeugt, indem sie Audioerfassungssignale, einschließlich des ersten Audioerfassungssignals, kombiniert; und die Adaptereinheit (215) so angeordnet ist, dass sie das zweite Audioausgangssignal individuell an die erste Sprecherkategorie und eine Eigenschaft des zweiten Benutzers anpasst.

3. Audioeinrichtung nach Anspruch 1 oder 2, wobei die Analysatoreinheit (211) angeordnet ist, um Wörter in dem ersten Audioerfassungssignal zu erkennen und um mindestens eine erste Spracheigenschaft der Spracheigenschaften als Reaktion auf die erkannten Wörter zu bestimmen.

4. Audioeinrichtung nach Anspruch 3, wobei die Analysatoreinheit (211) so angeordnet ist, dass sie die erste der Spracheigenschaften als Reaktion auf eine natürliche Sprachverarbeitung (Natural Language Processing, NLP) der erkannten Wörter bestimmt.

5. Audioeinrichtung nach einem vorstehenden Anspruch, wobei die Adaptereinheit (215) angeordnet ist, um auszuwählen, welche Audioerfassungssignale der Vielzahl von Audioerfassungssignalen in die Kombination eingeschlossen werden, um das erste Audioausgangssignal als Reaktion auf die erste Lautsprecherkategorie zu erzeugen.

6. Audioeinrichtung nach einem vorstehenden Anspruch, weiter umfassend eine Inhaltsanalysatoreinheit (217), die angeordnet ist, Segmente des ersten Audioerfassungssignals zu analysieren, um eine Inhaltskategorie für die Segmente aus einer Vielzahl von Inhaltskategorien zu bestimmen; und wobei die Adaptereinheit (215) angeordnet ist, das erste Audioausgangssignal als Reaktion auf die Inhaltskategorien anzupassen.

7. Audioeinrichtung nach Anspruch 6, wobei die Adaptereinheit (215) angeordnet ist, um Segmente des ersten Audioerfassungssignals für mindestens eine Kombination aus Inhaltskategorie und erster Sprecherkategorie zu dämpfen und Segmente des ersten Audioerfassungssignals für mindestens eine andere Kombination aus Inhaltskategorie und erster Sprecherkategorie nicht zu dämpfen.

8. Audioeinrichtung nach Anspruch 7, umfassend eine Benutzerschnittstelle (219) um eine Angabe der gedämpften Segmente darzustellen.

9. Audioeinrichtung nach einem vorstehenden Anspruch, wobei die Kategorisierereinheit (213) umfasst:

eine Signaturerzeugungseinheit (403) zum Erzeugen von Signaturen für Audioquellen als Reaktion auf Frequenzverteilungen der Audioerfassungssignale für die Audioquellen;

einen Speicher (405) zum Speichern von Signaturen für Audioquellen, die mit für die Audioquellen bestimmten Sprecherkategorien in Verbindung stehen; und wobei

die Signaturerzeugungseinheit (403) angeordnet ist, um eine erste Signatur für die erste Audioquelle als Reaktion auf das Erkennen der ersten Audioquelle zu erzeugen; und

die Kategorisierereinheit (213) angeordnet ist, um eine Übereinstimmung zwischen der ersten Signatur und einer im Speicher (405) gespeicherten Signatur bestimmt und die erste Sprecherkategorie für die erste Audioquelle als Reaktion auf eine mit der gespeicherten Signatur verbundene Sprecherkategorie bestimmt.

10. Audioeinrichtung nach einem vorstehenden Anspruch, wobei die Audioerfassungseinheit (201) angeordnet ist, um eine neue Audioquelle zu erkennen, und die Strahllenkereinheit (203) angeordnet ist, um einen Audiostrahl von der Steuerung in Richtung einer vorherigen Audioquelle auf die Steuerung in Richtung der neuen Audioquelle als Reaktion auf die Erkennung der neuen Audioquelle umzuschalten und die vorherige Audioquelle aus einer Vielzahl von Audioquellen auszuwählen, zu denen Strahlen als Reaktion auf eine Sprecherkategorie der vorherigen Audioquelle gesteuert werden.

11. Audioeinrichtung nach einem vorstehenden Anspruch, weiter umfassend

eine Erkennungseinheit (221) zum Erkennen eines aktiven Audioerfassungssignals, das ein aktuell aktives Sprachsignal umfasst; und

eine Benutzerschnittstelle (219) zum Anzeigen einer Angabe einer Sprecherkategorie, die einer Audioquelle des aktiven Audioerfassungssignals zugewiesen ist.

12. Audioeinrichtung nach einem vorstehenden Anspruch, wobei die Audioerzeugungseinheit (205) angeordnet ist, um mindestens eine Kombinationsgewichtung der Audioerfassungssignale als Reaktion auf die erste Sprecherkategorie anzupassen.

13. Audioeinrichtung nach einem vorstehenden Anspruch, wobei die Audioerfassungseinheit (201) angeordnet ist, um einen variablen Audiostrahl zu erzeugen, und die Strahllenkereinheit (203) angeordnet ist zum

Variieren des variablen Audiostrahls, um eine potenzielle neue Audioquelle zu erkennen;

Bestimmen, ob eine Übereinstimmung zwischen der potenziellen neuen Audioquelle und einer Audioquelle besteht, auf die einer der Vielzahl von Strahlen ausgerichtet ist, wobei die Bestimmung, ob eine Übereinstimmung besteht, auf einen Vergleich mindestens einer von einer Eigenschaft des variablen Audiostrahls und einer Eigenschaft der Audiostrahlen der Vielzahl von Audiostrahlen sowie einer Eigenschaft eines Audioerfassungssignals für den variablen Audiostrahl und einer Eigenschaft der Audioerfassungssignale für die Vielzahl von Audiostrahlen basiert; und

Umschalten eines Audiostrahls von der Ausrichtung auf eine vorherige Audioquelle zur Ausrichtung auf die potenzielle neue Audioquelle, wenn keine Übereinstimmung erkannt wird.

14. Verfahren zum Betreiben einer Audioeinrichtung, wobei das Verfahren Folgendes umfasst:

Erfassen von Audio in einer Umgebung durch Bilden einer Vielzahl von Audiostrahlen und Erzeugen eines Audioerfassungssignals für jeden Audiostrahl der Vielzahl von Audiostrahlen;

Lenken jedes Audiostrahls der Vielzahl von Audiostrahlen zu einer anderen Audioquelle;

Analysieren mindestens eines ersten Audioerfassungssignals, um Spracheigenschaften für Audio des ersten Audioerfassungssignals zu bestimmen;

Bestimmen einer ersten Sprecherkategorie aus einer Vielzahl von Sprecherkategorien, die eine Rolle eines Sprechers für eine erste Audioquelle des ersten Audioerfassungssignals darstellen, als Reaktion auf die Spracheigenschaften;

Erzeugen eines ersten Audioausgangssignals für einen ersten Benutzer durch Kombinieren von Audioerfassungssignalen, die das erste Audioerfassungssignal einschließen; und

Anpassen des ersten Audioausgangssignals als Reaktion auf die erste Sprecherkategorie und eine Zugriffsberechtigungseigenschaft, die einen zulässigen Grad des Zugriffs auf mindestens eine Kategorie von Informationen für den ersten Benutzer angibt.

**15.** Computerprogrammprodukt, umfassend Computerprogrammcodemittel, die adaptiert sind, um alle Schritte von Anspruch 15 durchzuführen, wenn das Programm auf einem Computer ausgeführt wird.

**Revendications**

**1.** Appareil audio, comprenant :

un dispositif de capture audio (201) agencé pour capturer un audio dans un environnement, le dispositif de capture audio (201) étant agencé pour former une pluralité de faisceaux audio et pour générer un signal de capture audio pour chaque faisceau audio de la pluralité de faisceaux audio ;
un séparateur de faisceau (203) agencé pour séparer chaque faisceau audio de la pluralité de faisceaux audio vers une source audio différente ;
un analyseur (211) agencé pour analyser au moins un premier signal de capture audio afin de déterminer des propriétés vocales pour l'audio du premier signal de capture audio ;
un dispositif de catégorisation (213) agencé pour déterminer une première catégorie de locuteur parmi une pluralité de catégories de locuteur représentant un rôle d'un locuteur pour une première source audio du premier signal de capture audio en réponse aux propriétés vocales ;
un générateur audio (205) agencé pour générer un premier signal de sortie audio pour un premier utilisateur en combinant des signaux de capture audio incluant le premier signal de capture audio ; et
un adaptateur (215) agencé pour adapter le premier signal de sortie audio en réponse à la première catégorie de locuteur et à une propriété d'autorisation d'accès indiquant un degré d'accès autorisé à au moins une catégorie d'informations pour le premier utilisateur.

**2.** Appareil audio selon la revendication 1, dans lequel le générateur audio (205) est en outre agencé pour générer un second signal de sortie audio différent pour un second utilisateur en combinant des signaux de capture audio incluant le premier signal de capture audio ; et l'adaptateur (215) est agencé pour adapter individuellement le second signal de sortie audio en réponse à la première catégorie de locuteur et à une propriété du second utilisateur.

**3.** Appareil audio selon la revendication 1 ou 2, dans lequel l'analyseur (211) est agencé pour détecter des mots dans le premier signal de capture audio, et pour déterminer au moins une première propriété vocale parmi les propriétés vocales en réponse aux mots détectés.

**4.** Appareil audio selon la revendication 3, dans lequel l'analyseur (211) est agencé pour déterminer la première des propriétés vocales en réponse à un traitement du langage naturel, NLP, des mots détectés.

**5.** Appareil audio selon l'une quelconque des revendications précédentes, dans lequel l'adaptateur (215) est agencé pour sélectionner quels signaux de capture audio parmi la pluralité de signaux de capture audio sont inclus dans la combinaison pour générer le premier signal de sortie audio en réponse à la première catégorie de locuteur.

**6.** Appareil audio selon l'une quelconque des revendications précédentes comprenant en outre un analyseur de contenu (217) qui est agencé pour analyser des segments du premier signal de capture audio afin de déterminer une catégorie de contenu pour les segments parmi une pluralité de catégories de contenu ; et dans lequel l'adaptateur (215) est agencé pour adapter le premier signal de sortie audio en réponse aux catégories de contenu.

**7.** Appareil audio selon la revendication 6, dans lequel l'adaptateur (215) est agencé pour atténuer des segments du premier signal de capture audio pour au moins une combinaison de catégorie de contenu et de première catégorie de locuteur, et pour ne pas atténuer des segments du premier signal de capture audio pour au moins une autre combinaison de catégorie de contenu et de première catégorie de locuteur.

**8.** Appareil audio selon la revendication 7 comprenant une interface utilisateur (219) pour présenter une indication des segments atténués.

**9.** Appareil audio selon l'une quelconque des revendications précédentes, dans lequel le dispositif de catégorisation (213) comprend :

un générateur de signature (403) pour générer des signatures pour des sources audio en réponse aux distributions de fréquence des signaux de capture audio pour les sources audio ;

une mémoire (405) pour stocker des signatures pour des sources audio liées à des catégories de locuteur déterminées pour les sources audio ; et dans lequel

le générateur de signature (403) est agencé pour générer une première signature pour la première source audio en réponse à la détection de la première source audio ; et

le dispositif de catégorisation (213) est agencé pour déterminer une correspondance entre la première signature et une signature stockée dans la mémoire (405), et pour déterminer la première catégorie de locuteur pour la première source audio en réponse à une catégorie de locuteur liée à la signature stockée.

10. Appareil audio selon l'une quelconque des revendications précédentes, dans lequel le dispositif de capture audio (201) est agencé pour détecter une nouvelle source audio, et le séparateur de faisceau (203) est agencé pour commuter un faisceau audio dirigé vers une source audio précédente pour le diriger vers la nouvelle source audio en réponse à la détection de la nouvelle source audio, et pour sélectionner la source audio précédente parmi une pluralité de sources audio vers lesquelles les faisceaux sont dirigés en réponse à une catégorie de locuteur de la source audio précédente.

11. Appareil audio selon l'une quelconque des revendications précédentes, comprenant en outre

un détecteur (221) pour détecter un signal de capture audio actif comprenant un signal vocal actuellement actif ; et
une interface utilisateur (219) pour présenter une indication d'une catégorie de locuteur attribuée à une source audio du signal de capture audio actif.

12. Appareil audio selon l'une quelconque des revendications précédentes, dans lequel le générateur audio (205) est agencé pour adapter au moins un poids de combinaison des signaux de capture audio en réponse à la première catégorie de locuteur.

13. Appareil audio selon l'une quelconque des revendications précédentes, dans lequel le dispositif de capture audio (201) est agencé pour générer un faisceau audio variable et le séparateur de faisceau (203) est agencé pour

faire varier le faisceau audio variable pour détecter une nouvelle source audio potentielle ;
déterminer s'il existe une correspondance entre la nouvelle source audio potentielle et une quelconque source audio vers laquelle un faisceau parmi la pluralité de faisceaux est dirigé, la détermination de l'existence d'une correspondance étant en réponse à une comparaison d'au moins une propriété du faisceau audio variable et d'une propriété des faisceaux audio parmi la pluralité de faisceaux audio, et d'une propriété d'un signal de capture audio pour le faisceau audio variable et d'une propriété des signaux de capture audio pour la pluralité de faisceaux audio ; et
commuter un faisceau audio dirigé vers une source audio précédente pour le diriger vers la nouvelle source audio potentielle si aucune correspondance n'est détectée.

14. Procédé de fonctionnement d'un appareil audio, le procédé comprenant :

la capture de l'audio dans un environnement en formant une pluralité de faisceaux audio et en générant un signal de capture audio pour chaque faisceau audio parmi la pluralité de faisceaux audio ;
le fait de diriger chaque faisceau audio parmi la pluralité de faisceaux audio vers une source audio différente ;
l'analyse d'au moins un premier signal de capture audio pour déterminer les propriétés vocales pour l'audio du premier signal de capture audio ;
la détermination d'une première catégorie de locuteur parmi une pluralité de catégories de locuteur représentant un rôle d'un locuteur pour une première source audio du premier signal de capture audio en réponse aux propriétés vocales ;
la génération d'un premier signal de sortie audio pour un premier utilisateur en combinant des signaux de capture audio incluant le premier signal de capture audio ; et
l'adaptation du premier signal de sortie audio en réponse à la première catégorie de locuteur et à une propriété d'autorisation d'accès indiquant un degré d'accès autorisé à au moins une catégorie d'informations pour le premier utilisateur.

15. Produit de programme informatique comprenant des moyens de code de programme informatique adaptés pour réaliser toutes les étapes de la revendication 15 lorsque ledit programme tourne sur un ordinateur.

**FIG. 1**

FIG. 2

FIG. 3

**FIG. 4**

**FIG. 5**

Was there any weird sound
from the machine

Yes and vibration too

PH 1

What was the KV that time

Don't worry Mr. X the
procedure will be done today

PH 2

FIG. 6

Part of conversation

Threshold Check

Not part of conversation (Different actor)

Context similarity score

$$Score_{context}= Similarity (Context\_Vector_{prev}, Context\_Vector_{new})$$

| | 1 | 2 | 3 | 4 | 5 | 6 | 7 | 8 | 9 |
|---|---|---|---|---|---|---|---|---|---|
| man | 1 | 0 | 0 | 0 | 0 | 0 | 0 | 0 | 0 |
| woman | 0 | 1 | 0 | 0 | 0 | 0 | 0 | 0 | 0 |
| boy | 0 | 0 | 1 | 0 | 0 | 0 | 0 | 0 | 0 |
| girl | 0 | 0 | 0 | 1 | 0 | 0 | 0 | 0 | 0 |
| prince | 0 | 0 | 0 | 0 | 1 | 0 | 0 | 0 | 0 |
| princess | 0 | 0 | 0 | 0 | 0 | 1 | 0 | 0 | 0 |
| queen | 0 | 0 | 0 | 0 | 0 | 0 | 1 | 0 | 0 |
| king | 0 | 0 | 0 | 0 | 0 | 0 | 0 | 1 | 0 |
| monarch | 0 | 0 | 0 | 0 | 0 | 0 | 0 | 0 | 1 |

Context_Vector_prev

| | 1 | 2 | 3 | 4 | 5 | 6 | 7 | 8 | 9 |
|---|---|---|---|---|---|---|---|---|---|
| man | 1 | 0 | 0 | 0 | 0 | 0 | 0 | 0 | 0 |
| woman | 0 | 1 | 0 | 0 | 0 | 0 | 0 | 0 | 0 |
| boy | 0 | 0 | 1 | 0 | 0 | 0 | 0 | 0 | 0 |
| girl | 0 | 0 | 0 | 1 | 0 | 0 | 0 | 0 | 0 |
| prince | 0 | 0 | 0 | 0 | 1 | 0 | 0 | 0 | 0 |
| princess | 0 | 0 | 0 | 0 | 0 | 1 | 0 | 0 | 0 |
| queen | 0 | 0 | 0 | 0 | 0 | 0 | 1 | 0 | 0 |
| king | 0 | 0 | 0 | 0 | 0 | 0 | 0 | 1 | 0 |
| monarch | 0 | 0 | 0 | 0 | 0 | 0 | 0 | 0 | 1 |

Context_Vector_new

Context extraction

Tokenization

Stemming & stop word

Word Embedding

Context Embedding

Speech to text

Previous O/P of focused beam

Context extraction

Tokenization

Stemming & stop word

Word Embedding

Context Embedding

Speech to text

Present/new O/P of focused beam

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7006616 B1
- US 2005088981 A1
- US 2020327877 A1
- EP 84679 A
- US 7146012 B
- US 7602926 B
- EP 83680 A
- EP 50045 A